# EUROPÄISCHE PATENTSCHRIFT

(11) **EP 1 065 232 B1**
(45) Veröffentlichungstag und Bekanntmachung des Hinweises auf die Patenterteilung: **24.09.2003**
(21) Anmeldenummer: 00109632.0
(22) Anmeldetag: 05.05.2000
(51) Int. Cl.: C08G 69/48, C08G 69/26, C08G 69/02, C08G 83/00

(54) **Polyamid-Pfropfcopolymere**
Polyamide graft copolymers
Copolyamides greffés

(30) Priorität: 29.06.1999 DE 19929885; 09.02.2000 DE 10005639
(43) Veröffentlichungstag der Anmeldung: 03.01.2001
(73) Patentinhaber: Degussa AG, 40474 Düsseldorf (DE)
(72) Erfinder: Häger, Harald, Dr., 45772 Marl (DE); Richter, Ralf, Dr., 45657 Recklinghausen (DE); Oenbrink, Georg, Dr., 48249 Dülmen (DE)

(56) Entgegenhaltungen:
- EP-A- 0 307 810
- US-A- 3 442 975

## Beschreibung

Die Erfindung betrifft Polyamid-Pfropfcopolymere, die aus einem Polyamin-Teil und aufgepfropften Polyamid-Ketten bestehen.

Pfropfcopolymere auf Basis von Polyamin und Polyamid sind bekannt. Sie können beispielsweise durch kationische Polymerisation von Caprolactam in Gegenwart von Polyethyleniminhydrochlorid-Dendrimeren als Kemmolekül hergestellt werden (J. M. Warakomski, Chem. Mater. 1992, 4, 1000 - 1004). Derartige PA 6-Dendrimere besitzen, verglichen mit linearem PA 6, eine deutlich verringerte Schmelze- und Lösungsviskosität, aber unveränderte Zugfestigkeit, Steifigkeit, Schmelzpunkte, Schmelzwärmen und Barrierewirkung gegenüber Sauerstoff.

Pfropfcopolymere auf Basis von Polyvinylamin und Polyamid sind aus der US-PS 2 615 863 bekannt. In der US-PS 3 442 975 sind Pfropfcopolymere beschrieben, die durch Polymerisation von Lactamen in Gegenwart von hochmolekularem Polyethylenimin hergestellt werden.

Die DE-OS 19 15 772 beschreibt Blends aus einem Polyimin/Polyamid-Pfropfcopolymer sowie einem Polyolefin und/oder Polyester, die zu leicht färbbaren Fasern verarbeitet werden.

Schließlich werden in der DE-OS 196 54 179 H-förmige Polyamide beschrieben, die aus Lactamen bzw. Aminocarbonsäuren, einem mindestens trifunktionellen Amin, difunktionellen Carbonsäuren und monofunktioneller Carbonsäure hergestellt werden, wobei die beiden letzteren zueinander und zu den funktionellen Gruppen des mindestens trifunktionellen Amins in einem bestimmten Verhältnis stehen. Die Produkte weisen eine verbesserte Schmelzestabilität auf.

Derartige Polyamid-Pfropfcopolymere sind beispielsweise als Blendkomponente geeignet, einer Formmasse ein besseres Verarbeitungsverhalten oder eine bessere Verträglichkeit zu anderen Polymeren zu vermitteln. Die bisher bekannten, in erster Linie PA6-Pfropfketten enthaltenden Pfropfcopolymere weisen gegenüber Polyamiden, die sich von einer Kombination von Diamin und Dicarbonsäure herleiten, allerdings nicht immer optimale Verträglichkeit auf, wenn diese Polyamide als Formmassenbasis verwendet werden.

Analoge Polyamid-Pfropfcopolymere, die Pfropfketten enthalten, welche sich von einer Kombination von Diamin und Dicarbonsäure herleiten, sind bisher nicht bekannt. Der Grund liegt möglicherweise darin, daß beim Versuch ihrer Herstellung aus Diamin, Dicarbonsäure und einem Polyamin ein vemetztes Produkt erhalten wird.

Es bestand daher die Aufgabe, derartige Polyamid-Pfropfcopolymere zur Verfügung zu stellen. Diese Aufgabe wurde mit den weiter unten beschriebenen Verfahren gelöst.

Gegenstand der Erfindung ist somit ein Pfropfcopolymer, das Einheiten folgender Monomere enthält:
a) 0,5 bis 25 Gew.-%, bevorzugt 1 bis 20 Gew.-% und besonders bevorzugt 1,5 bis 16 Gew.-%, bezogen auf das Pfropfcopolymer, eines Polyamins mit mindestens 11 Stickstoffatomen und einem zahlenmittleren Molekulargewicht Mₙ von mindestens 500 g/mol und bevorzugt von mindestens 800 g/mol;
b) einer äquimolaren Kombination von Diamin und Dicarbonsäure als polyamidbildende Monomere;
c) gegebenenfalls Lactam und/oder ω-Aminocarbonsäure als weitere polyamidbildende Monomere, wobei diese maximal 95 Gew.-%, bevorzugt maximal 90 Gew.-%, besonders bevorzugt maximal 70 Gew.-% und ganz besonders bevorzugt maximal 50 Gew.-% der Polyamid-Pfropfketten ergeben können.

Als Polyamin können beispielsweise folgende Substanzklassen verwendet werden:
- Polyvinylamine (Römpp Chemie Lexikon, 9. Auflage, Band 6, Seite 4921, Georg Thieme Verlag Stuttgart 1992)
- Polyamine, die aus alternierenden Polyketonen hergestellt werden (DE-OS 196 54 058)
- Dendrimere wie beispielsweise
   ((H₂N-(CH₂)₃)₂N-(CH₂)₃)₂-N(CH₂)₂-N((CH₂)₂-N((CH₂)₃-NH₂)₂)₂
   (DE-A-196 54 179) oder
   3,15-Bis(2-aminoethyl)-6,12-bis[2-[bis(2-aminoethyl)amino]ethyl]-9-[2-[bis[2-bis(2-aminoethyl)amino]ethyl]amino]ethyl]3,6,9,12,15-pentaazaheptadecan-1,17-diamin (J. M. Warakomski, Chem. Mat. 1992, 4, 1000 - 1004);
- lineare Polyethylenimine, die durch Polymerisation von 4,5-Dihydro-1,3-oxazolen und anschließende Hydrolyse hergestellt werden können (Houben-Weyl, Methoden der Organischen Chemie, Band E20, Seiten 1482 - 1487, Georg Thieme Verlag Stuttgart, 1987);
- verzweigte Polyethylenimine, die durch Polymerisation von Aziridinen erhältlich sind (Houben-Weyl, Methoden der Organischen Chemie, Band E20, Seiten 1482 - 1487, Georg Thieme Verlag Stuttgart, 1987) und die in der Regel folgende Aminogruppenverteilung besitzen:
   25 bis 46 % primäre Aminogruppen,
   30 bis 45 % sekundäre Aminogruppen und
   16 bis 40 % tertiäre Aminogruppen.

Das Polyamin besitzt im bevorzugten Fall ein zahlenmittleres Molekulargewicht Mₙ von maximal 20 000 g/mol, besonders bevorzugt von maximal 10 000 g/mol und insbesondere bevorzugt von maximal 5 000 g/mol.

Kombinationen von Diamin und Dicarbonsäure sind beispielsweise Hexamethylendiamin/Adipinsäure, Hexamethylendiamin/Dodecandisäure, Octamethylendiamin/Sebacinsäure, Decamethylendiamin/Sebacinsäure, Decamethylendiamin/Dodecandisäure, Dodecamethylendiamin/Dodecan-disäure, Dodecamethylendiamin/2,6-Naphthalindicarbonsäure. Daneben können aber auch alle anderen Kombinationen eingesetzt werden wie Decamethylendiamin/Dodecandisäure/Terephthalsäure, Hexamethylendiamin/Adipinsäure/Terephthalsäure, Hexamethylendiamin/Adipinsäure/Caprolactam, Decamethylendiamin/Dodecandisäure/ω-Aminoundecansäure, Decamethylendiamin/Dodecandisäure/Laurinlactam, Decamethylendiamin/Terephthalsäure/Laurinlactam oder Dodecamethylendiamin/2,6-Naphthalindicarbonsäure/Laurinlactam.

Lactame bzw. ω-Aminocarbonsäuren, die als polyamidbildende Monomere eingesetzt werden, enthalten 4 bis 19 und insbesondere 6 bis 12 Kohlenstoffatome. Besonders bevorzugt werden ε-Caprolactam, ε-Aminocapronsäure, Capryllactam, ω-Aminocaprylsäure, Laurinlactam, ω-Aminododecansäure und/oder ω-Aminoundecansäure eingesetzt.

In einer bevorzugten Ausführungsform wird das Pfropfcopolymer zusätzlich unter Verwendung einer Oligocarbonsäure hergestellt, die ausgewählt ist aus 0,015 bis 3 Mol-% Dicarbonsäure und 0,01 bis 1,2 Mol-% Tricarbonsäure mit 6 bis 24 C-Atomen, jeweils bezogen auf die Summe der übrigen polyamidbildenden Monomere. Bei dieser Bezugnahme wird bei der äquimolaren Kombination von Diamin und Dicarbonsäure jedes dieser Monomere einzeln betrachtet. Auf diese Weise besitzen die polyamidbildenden Monomere insgesamt einen leichten Überschuß an Carboxylgruppen. Die angegebene Obergrenze für Dicarbonsäure bzw. Tricarbonsäure soll nur sicherstellen, daß kein vemetztes, sondern ein thermoplastisches Pfropfcopolymer entsteht. Nach derzeitigen Kenntnissen sind diese Obergrenzen ein guter Richtwert. In Einzelfällen, vor allem bei Einsatz relativ hoher Polyaminmengen, können aber noch höhere Oligocarbonsäuremengen zugesetzt werden. Derartige Pfropfcopolymere liegen noch im Rahmen der Erfindung. Wird eine Dicarbonsäure verwendet, setzt man bevorzugt 0,03 bis 2,2 Mol-%, besonders bevorzugt 0,05 bis 1,5 Mol-%, ganz besonders bevorzugt 0,1 bis 1 Mol-% und insbesondere 0,15 bis 0,65 Mol-% zu; verwendet man eine Tricarbonsäure, so nimmt man vorzugsweise 0,02 bis 0,9 Mol-%, besonders bevorzugt 0,025 bis 0,6 Mol-%, ganz besonders bevorzugt 0,05 bis 0,4 Mol-% und insbesondere 0,03 bis 0,25 Mol-%. Durch die Mitverwendung der Oligocarbonsäure wird die Lösemittel- und Kraftstoffbeständigkeit deutlich verbessert, insbesondere die Hydrolyse- und Alkoholysebeständigkeit und die Spannungsrißbeständigkeit, aber auch das Quellungsverhalten und damit verbunden die Dimensionsbeständigkeit sowie die Sperrwirkung gegen Diffusion.

Als Oligocarbonsäure kann jede beliebige Di- oder Tricarbonsäure mit 6 bis 24 C-Atomen eingesetzt werden, beispielsweise Adipinsäure, Korksäure, Azelainsäure, Sebacinsäure, Dodecandisäure, Isophthalsäure, 2,6-Naphthalindicarbonsäure, Cyclohexan-1.4-dicarbonsäure, Trimesinsäure und/oder Trimellitsäure.

Zusätzlich können, falls gewünscht, aliphatische, alicyclische, aromatische, aralkylische undloder alkylarylsubstituierte Monocarbonsäuren mit 3 bis 50 Kohlenstoffatomen wie z. B. Laurylsäure, ungesättigte Fettsäuren, Acrylsäure oder Benzoesäure als Regler eingesetzt werden. Mit diesen Reglern kann die Konzentration an Aminogruppen verringert werden, ohne die Molekülgestalt zu verändern. Zusätzlich können auf diese Weise funktionelle Gruppen wie Doppel- bzw. Dreifachbindungen etc. eingeführt werden. Es ist aber erwünscht, daß das Pfropfcopolymer einen substantiellen Anteil an Aminogruppen besitzt. Vorzugsweise liegt die Aminogruppenkonzentration des Pfropfcopolymers im Bereich von 100 bis 2 500 mmol/kg, besonders bevorzugt im Bereich von 150 bis 1 500 mmol/kg und ganz besonders bevorzugt im Bereich von 250 bis 1 300 mmol/kg. Unter Aminogruppen werden hier und im folgenden nicht nur Aminoendgruppen, sondern auch gegebenenfalls vorhandene sekundäre bzw. tertiäre Aminfunktionen des Polyamins verstanden.

Die erfindungsgemäßen Pfropfcopolymere können nach verschiedenen Verfahren hergestellt werden.

Ein bevorzugtes Verfahren besteht darin, daß in einem zweistufigen Prozeß zuerst die Präpolymerisation von Diamin und Dicarbonsäure sowie der eventuellen Cokomponenten Lactam bzw. ω-Aminocarbonsäure durchgeführt wird; im zweiten Schritt wird das Polyamin zugegeben, während die gegebenenfalls mitverwendete Oligocarbonsäure vor, während oder nach der Präpolymerisation zudosiert wird. Dann wird bei Temperaturen zwischen 200 und 290 °C entspannt und im Stickstoffstrom oder im Vakuum polykondensiert.

Ein weiteres bevorzugtes Verfahren besteht im hydrolytischen Abbau eines Polyamids zu einem Präpolymer und gleichzeitige oder anschließende Reaktion mit dem Polyamin. Vorzugsweise werden Polyamide verwendet, bei denen die Endgruppendifferenz näherungsweise Null beträgt, oder bei denen die gegebenenfalls mitverwendete Oligocarbonsäure bereits einpolykondensiert ist. Die Oligocarbonsäure kann aber auch zu Anfang oder im Laufe der Abbaureaktion zugegeben werden.

Mit diesen Verfahren lassen sich ultrahochverzweigte Polyamide mit Säurezahlen kleiner als 40 mmol/kg, bevorzugt kleiner als 20 mmol/kg und besonders bevorzugt kleiner als 10 mmol/kg herstellen. Schon nach ein- bis fünfstündiger Reaktionszeit bei Temperaturen von 200 °C bis 290 °C wird ein annähernd vollständiger Umsatz erzielt.

Falls gewünscht, kann in einem weiteren Verfahrensschritt eine mehrstündige Vakuumphase angeschlossen werden. Diese dauert mindestens vier Stunden, bevorzugt mindestens sechs Stunden und besonders bevorzugt mindestens acht Stunden bei 200 bis 290 °C. Nach einer Induktionsperiode von mehreren Stunden wird dann eine Erhöhung der Schmelzeviskosität beobachtet, was darauf zurückzuführen sein dürfte, daß eine Reaktion von Aminoendgruppen miteinander unter Ammoniakabspaltung und Kettenverknüpfung stattfindet. Hierdurch wird das Molekulargewicht weiter erhöht, was insbesondere für Extrusionsformmassen vorteilhaft ist.

Falls man die Reaktion nicht in der Schmelze zu Ende führen will, kann das ultrahochverzweigte Polyamid gemäß dem Stand der Technik auch in fester Phase nachkondensiert werden.

Die erfindungsgemäßen Pfropfcopolymeren können für Spritzguß- oder Extrusionsformmassen verwendet werden. Sie können auch als Blendkomponente zur Modifikation von Gebrauchseigenschaften oder als Schmelzkleber eingesetzt werden.

Die in den Beispielen aufgeführten Ergebnisse wurden mit Hilfe nachstehender Meßverfahren bestimmt.

Zur Bestimmung der Carboxylendgruppen wurde 1 g Pfropfcopolymer in 50 ml Benzylalkohol unter Stickstoffabdeckung bei 165 °C gelöst. Die Lösezeit betrug maximal 20 min. Die Lösung wurde mit einer Lösung von KOH in Ethylenglykol (0,05 mol KOH/l) gegen Phenolphthalein bis zum Farbumschlag titriert.

Zur Bestimmung der Aminogruppen wurde 1 g des Pfropfcopolymers in 50 ml m-Kresol bei 25 °C gelöst. Die Lösung wurde mit Perchlorsäure potentiometrisch titriert.

Die Bestimmung der Lösungsviskosität ηᵣₑₗ (relative Viskosität) erfolgte unter Verwendung einer 0,5 gew.-%igen m-Kresol-Lösung bei 25 °C gemäß DIN 53727/ISO 307.

### Vergleichsbeispiel 1:

5,570 kg Adipinsäure (38,12 Mol) wurde bei 160 °C aufgeschmolzen und in einen auf 180 °C geheizten Polymerisationskessel überführt. Anschließend wurde eine Mischung aus 4,430 kg Hexamethylendiamin (38,12 Mol), 440 g Wasser und 86 g Polyethylenimin (Lupasol G 100 der BASF AG, Ludwigshafen) zudosiert und auf 220 °C gebracht. Unter einem Druck von 20 bar wurde nun 1,5 Stunden ankondensiert und anschließend schrittweise auf Atmosphärendruck entspannt, wobei gleichzeitig die Temperatur auf 280 °C erhöht wurde. Die Viskosität der Reaktionsmischung stieg hierbei stark an, was bis zum Rührerstillstand führte. Das Produkt ließ sich nicht mehr aus dem Kessel ausfahren.

### Beispiel 1:

8,0 kg PA 66 (Ultramid A3 der BASF AG, Ludwigshafen) und 320 g Wasser wurden in einen druckfesten Polykondensationskessel überführt, wobei mit Stickstoff ein Überdruck von 0,2 bar eingestellt wurde. Anschließend wurde ohne Rühren für 7 Stunden auf 270 °C erhitzt, wobei sich ein Druck von 20 bar einstellte. Danach wurde der Rührer eingeschaltet und innerhalb von 3 Stunden auf einen Restwasserdampfdruck von 5 bar entspannt. Daraufhin wurden 80 g Polyethylenimin (Lupasol G100 der BASF AG, Ludwigshafen) zudosiert, bei dem sich einstellenden Eigendruck eingearbeitet, anschließend auf Normaldruck entspannt und 2 Stunden bei 270 °C Stickstoff übergeleitet. Die klare Schmelze wurde über eine Schmelzepumpe als Strang ausgetragen, im Wasserbad abgekühlt und anschließend granuliert.
ηᵣₑₗ: 1,62
Schmelztemperatur Tₘ: 259 °C
Aminogruppenkonzentration: 201 mmol/kg
Carboxylendgruppenkonzentration: < 20 mmol/kg

## Patentansprüche

1. Pfropfcopolymer, das Einheiten folgender Monomere enthält:
a) 0,5 bis 25 Gew.-%, bezogen auf das Pfropfcopolymer, eines Polyamins mit mindestens 11 Stickstoffatomen und einem zahlenmittleren Molekulargewicht Mₙ von mindestens 500 g/mol;
b) einer äquimolaren Kombination von Diamin und Dicarbonsäure als polyamidbildende Monomere.

2. Pfropfcopolymer gemäß Anspruch 1,
**dadurch gekennzeichnet,**
**daß** als weitere polyamidbildende Monomere eingebaut sind:
c) Lactam und/oder ω-Aminocarbonsäure, wobei diese maximal 95 Gew.-% der Polyamidpfropfketten ergeben können.

3. Pfropfcopolymer gemäß einem der vorhergehenden Ansprüche,
**dadurch gekennzeichnet,**
**daß** es zusätzlich unter Verwendung folgender Monomere hergestellt wird:
d) Oligocarbonsäure, ausgewählt aus 0,015 bis 3 Mol-% Dicarbonsäure und 0,01 bis 1,2 Mol-% Tricarbonsäure mit 6 bis 24 C-Atomen, jeweils bezogen auf die Summe der übrigen polyamidbildenden Monomere.

4. Pfropfcopolymer gemäß einem der vorhergehenden Ansprüche,
**dadurch gekennzeichnet,**
**daß** es eine Aminogruppenkonzentration im Bereich von 100 bis 2 500 mmol/kg und eine Säurezahl von kleiner als 40 mmol/kg besitzt.

5. Verfahren zur Herstellung eines Pfropfcopolymers gemäß einem der vorhergehenden Ansprüche,
**dadurch gekennzeichnet,**
**daß** ein Polyamid-Präpolymer mit dem Polyamin umgesetzt wird.

## Claims

1. A graft copolymer which contains the following monomer units:
a) from 0.5 to 25% by weight, based on the graft copolymer, of a polyamine having at least 11 nitrogen atoms and a number-average molar mass Mₙ of at least 500 g/mol; and
b) an equimolar combination of diamine and dicarboxylic acid as polyamide-forming monomers.

2. A graft copolymer according to claim 1,
**characterized in that**
other polyamide-forming monomers incorporated comprise:
c) lactam and/or ω-aminocarboxylic acid, where these provide not more than 95% by weight of the polyamide graft chains.

3. A graft copolymer according to any one of the preceding claims,
**characterized in that** it is prepared with concomitant use of the following monomers:
d) oligocarboxylic acid, selected from the group consisting of from 0.015 to 3 mol% of dicarboxylic acid and from 0.01 to 1.2 mol% of tricarboxylic acid having from 6 to 24 carbon atoms, based in each case on the total of the other polyamide-forming monomers.

4. A graft copolymer according to any one of the preceding claims,
**characterized in that**
its amino group concentration is from 100 to 2500 mmol/kg and its acid number is below 40 mmol/kg.

5. A process for preparing a graft copolymer according to any one of the preceding claims,
**characterized in that**
a polyamide prepolymer is reacted with the polyamine.

## Revendications

1. Copolymère greffé, qui contient des unités des monomères suivants :
a) 0,5 à 25 % en poids, par rapport au copolymère greffé, d'une polyamine comportant au moins 11 atomes d'azote et d'un poids moléculaire moyen par rapport au nombre Mn d'au moins 500 g/mole ;
b) une combinaison équimolaire de diamine et d'acide dicarboxylique comme monomères formant des polyamides.

2. Copolymère greffé selon la revendication 1,
**caractérisé en ce que**
se trouvent incorporés comme autres monomères formant des polyamides :
c) lactame et/ou acide ω-aminocarboxylique, ceux-ci pouvant donner au maximum 95 % des chaînes greffées de polyamides.

3. Copolymère greffé selon l'une quelconque des revendications précédentes,
**caractérisé en ce qu'**
on le fabrique en plus, avec utilisation des monomères suivants :
d) acide oligocarboxylique, choisi parmi 0,015 à 3 moles % d'acide dicarboxylique et 0,01 à 1,2 mole % d'acide tricarboxylique, comportant de 6 à 24 atomes de C, à chaque fois par rapport à la somme des autres monomères formant des polyamides.

4. Copolymère greffé selon l'une quelconque des revendications précédentes,
**caractérisé en ce qu'**
il possède une concentration en groupes amino dans la plage de 100 à 2500 mmoles/kg et un indice d'acide inférieur à 40 mmoles/kg.

5. Procédé pour la fabrication d'un copolymère greffé selon l'une quelconque des revendications précédentes,
**caractérisé en ce qu'**
on fait réagir un pré-polymère de polyamide avec la polyamine.
